# EUROPÄISCHE PATENTSCHRIFT

(11) **EP 2 510 327 B1**
(45) Veröffentlichungstag und Bekanntmachung des Hinweises auf die Patenterteilung: **09.08.2017**
(21) Anmeldenummer: 10790621.6
(22) Anmeldetag: 10.12.2010
(51) Int. Cl.: B60T 7/04, B60T 7/12, B60T 17/22

(54) **STELLVORRICHTUNG FÜR EINEN FAHRROBOTER**
ACTUATING DEVICE FOR A ROBOT DRIVER
DISPOSITIF DE POSITIONNEMENT POUR UN ROBOT CONDUCTEUR

(30) Priorität: 11.12.2009 DE 102009054575
(43) Veröffentlichungstag der Anmeldung: 17.10.2012
(73) Patentinhaber: MAHA-AIP GmbH & Co. KG, 87490 Haldenwang (DE)
(72) Erfinder: KNESTEL, Anton, 87496 Hopferbach (DE); KNESTEL, Markus, 87496 Hopferbach (DE); SPECKER, Thomas, 78570 Mühlheim (DE)
(74) Vertreter: MERH-IP Matias Erny Reichl Hoffmann Patentanwälte PartG mbB
(86) Internationale Anmeldenummer: PCT/EP2010/007535
(87) Internationale Veröffentlichungsnummer: WO 2011/069669

(56) Entgegenhaltungen:
- JP-A- 2008 264 987
- US-A1- 2002 134 169

## Beschreibung

Die vorliegende Erfindung betrifft eine Stellvorrichtung für einen Fahrroboter, die den Aufwand für das Einstellen bzw. für das Einlernen des/der Stellmittel verringert. Des Weiteren kann der Aufwand für die Ermittlung der Pedalkraft verringert werden.

Es ist bekannt, dass auf Rollenprüfständen nicht nur Menschen für die Umsetzung von Fahrzyklen bzw. für die Funktionskontrolle zum Einsatz kommen, sondern es werden auch Fahrroboter verwendet, die gegenüber einem menschlichen Fahrer den Vorteil eines exakt steuerbaren Programmablaufs und einer relativ geringen Streuung der anzufahrenden Sollwerte aufweisen.

Ein Problem bei Fahrrobotern ist allerdings der Vorgang des Anpassens des maximalen Verfahrwegs der Aktuatoren zur Betätigung der Pedale an die jeweilige Pedalkonfiguration, wobei sich der Abstand zwischen der Nullstellung des Pedals und seiner durchgedrückten Stellung jeweils in Abhängigkeit von dem zu prüfenden Kraftfahrzeug ändert. Deshalb ist es bislang erforderlich, dass der Aktuator auf seinen maximalen Verfahrweg während des jeweiligen Prüfzyklus eingelernt werden muss, wobei der Aktuator zuerst an die Nullstellung des Pedals herangeführt und anschließend mit diesem verbunden werden muss.

Danach muss der Aktuator schrittweise so lange aktuatorisch verfahren werden, bis die durchgedrückte Stellung des Pedals erreicht ist, was zeitaufwändig ist. Die Steuerung des Aktuators sorgt dann im Betrieb dafür, dass der Aktuator zwischen der gelernten Nullstellung und der vorstehend beschriebenen gelernten durchgedrückten Stellung des Pedals verfahren wird.

JP 2008/264987 A beschreibt einen Roboterarm der von einem Arm gebildet wird, an dem eine große Anzahl magnetischer Pole mit vorgeschriebenen Abständen zueinander entlang der axialen Richtung angeordnet sind, und einen Aktuator, der ein Durchgangsloch aufweist, in das der Arm mit Spiel eingepasst ist.

US 2002/0134169 A1 beschreibt ein Verfahren und eine Vorrichtung zum Durchführen von Leistungstests von Kraftfahrzeugen, wobei ein Aktuator eine Niederdrückkraft auf eine Steuereinheit aufbringt, der von einer Steuereinrichtung gesteuert wird.

Aus der DE 43 14 731 A1 ist eine Vorrichtung und ein Verfahren zur Steuerung eines Fahrroboters bekannt, bei der an den vorderen Enden der Aktuatoren Kraftmesssensoren angebracht sind, welche fortlaufend die Betätigungskraft in jeder beliebigen Stellung des Pedals ermitteln können. Nachteilig bei dieser Vorrichtung ist jedoch, dass ein erheblicher Aufwand im Hinblick auf die zugehörige Mess- und Auswertetechnik erforderlich ist.

Es ist eine Aufgabe der vorliegenden Erfindung eine Stellvorrichtung für einen Fahrroboter bereitzustellen, bei der die Pedalkraftmessung vereinfacht wird. Eine weitere Aufgabe der vorliegenden Erfindung ist es, ein einfaches und schnelles Einrichten bzw. Einlernen des Betätigungsmittels für unterschiedliche Pedalkonfigurationen zu ermöglichen.

Diese Aufgabe wird erfindungsgemäß durch die Gegenstände des unabhängigen Anspruchs gelöst. Vorteilhafte Ausgestaltungen und bevorzugte Ausführungsbeispiele der Erfindung sind in den Unteransprüchen angegeben.

Erfindungsgemäß wird eine Stellvorrichtung für einen Fahrroboter bereitgestellt, die zumindest ein Stellmittel aufweist, wobei dieses zumindest eine Betätigungsstange umfasst, die einen Aktuatorbereich und ein Kontaktelement aufweist, wobei das Kontaktelement mit einem Pedal in Verbindung bringbar ist und die Betätigungsstange im Aktuatorbereich ein rotations-symmetrisches Bauteil ist, das im Aktuatorbereich in einem Aktuatorgehäuse verschiebbar aufgenommen ist. Des Weiteren enthält die Betätigungsstange im Aktuatorbereich ein erstes Element und das Aktuatorgehäuse weist ein zweites Element auf, das in einem äußeren Umfangsbereich des ersten Elements vorgesehen ist, wobei das erste Element und das zweite Element ein elektromagnetisches Krafterzeugungsmittel zum Verfahren der Betätigungsstange bilden.

Der vorliegende Aufbau der Stellvorrichtung hat den Vorteil, dass die Verwendung von (Kraft)messsensoren für die Bestimmung der Betätigungskraft des Pedals sowohl für das Einrichten des Stellmittels beim Verbinden mit dem Pedal als auch für deren Messung im Betrieb entfallen kann, da die von dem elektromagnetischen Krafterzeugungsmittel in die Betätigungsstange eingeleitete Kraft beispielweise proportional zum elektrischen Strom für das zweite Element und damit bei Kenntnis der elektrischen Stroms bekannt ist. Somit können die Kosten für die Stellvorrichtung verringert werden.

Ein weiterer Vorteil der vorliegenden Stellvorrichtung ergibt sich im Hinblick auf das Einstellen bzw. das Einlernen des Stellmittels gegenüber der vorstehend beschriebenen Vorgehensweise gemäß dem Stand der Technik. Für die Ermittlung der Position der Betätigungsstange in der Nullstellung des Pedals und zur Anbindung der Betätigungsstange an dem Pedal wird bei der vorliegenden Stellvorrichtung zuerst das elektromagnetische Krafterzeugungsmittel ausgeschaltet. Anschlie-ßend wird die Betätigungsstange so lange manuell in Richtung des Pedals geführt, bis das Kontaktelement, welches in Abhängigkeit von dem zu betätigenden Pedal, auch ein Verbindungselement sein kann, der Betätigungsstange in eine vorzugsweise formschlüssige bzw. eine kraftschlüssige Verbindung mit dem Pedal gebracht werden kann, wobei nur eine geringe Kraft zum Verschieben der Betätigungsstange erforderlich ist.

Das Ermitteln der Endstellung der Betätigungsstange für das durchgedrückte Pedal erfolgt ebenfalls bei einem ausgeschaltetem elektromagnetischen Krafterzeugungsmittel, wobei hierzu die Betätigungsstange so lange verfahren wird, bis die Endstellung des Pedals erreicht ist. Anschließend wird von der Wegmessung der Betätigungsstange deren Position als Endposition in einem angeschlossenen Rechner abgespeichert.

Zudem bietet die vorliegende Stellvorrichtung für einen Fahrroboter den Vorteil, dass aufgrund ihres Aufbaus und der Minimierung der bewegten Teile eine besonders leise und dynamische Stellvorrichtung für einen Fahrroboter bereit gestellt wird, die sich auch zum Einsatz an einem Fahrgeräuschprüfstand eignet.

Es kann zwischen dem ersten Element und dem zweiten Element des elektromagnetischen Krafterzeugungsmittel ein Spalt vorgesehen sein, wobei die Größe des Spaltes derart gewählt werden kann, dass ein Verkippen bzw. ein Verkanten des Aktuatorbereichs der Betätigungsstange innerhalb des Aktuatorgehäuses verhindert wird, während gleichzeitig eine möglichst leichtgängige, d.h. reibungsarme, Führung des Aktuatorbereichs in dem zweiten Element realisiert wird. Die Spaltbreite zwischen dem ersten Element und dem zweiten Element des elektromagnetischen Krafterzeugungsmittels kann dabei in Längsrichtung des zweiten Elements im Wesentlichen konstant sein. Alternativ dazu kann die Spaltbreite zwischen dem ersten Element und dem zweiten Element des elektromagnetischen Krafterzeugungsmittels in Längsrichtung des zweiten Elements auch abnehmen bzw. zunehmen.

Weiterhin kann der Aktuatorbereich im Betrieb in jeder beliebigen Stellung der Betätigungsstange an beiden Enden des Aktuatorgehäuse überstehen. Damit ist die Länge des Verfahrwegs für die Betätigungsstange im Betrieb lediglich durch die Länge des ersten Elements in der Betätigungsstange begrenzt, während gleichzeitig ein Verfahren der Betätigungsstange in entgegen gesetzten Richtungen möglich ist.

Weiterhin kann sich der Aktuatorbereich in jeder beliebigen Stellung der Betätigungsstange in Längsrichtung durch das Aktuatorgehäuse erstrecken.

Des Weiteren kann in dem elektromagnetischen Krafterzeugungsmittel das erste Element zumindest eine Spule sein und das zweite Element kann zumindest einen Magneten aufweisen.

Unter einer Spule soll im Folgenden ein Bauteil verstanden werden, das einerseits eine vorbestimmte Anzahl von Wicklungen aufweist, und andererseits dazu geeignet ist, ein Magnetfeld zu erzeugen oder zu detektieren. Eine Spule kann aus mindestens einem Wickel eines Stromleiters aus bspw. Draht, Kupferlackdraht oder einer Hochfrequenzlitze bestehen. Die Spule kann auf einem Spulenträger gewickelt sein. Des Weiteren kann die Spule mit einem magnetisierbaren Kern versehen sein. Die elektromagnetischen Eigenschaften einer Spule werden insbesondere durch die Windungsanordnung, ihren Durchmesser, das Wickel- und das Kernmaterial bestimmt, welche sich quantitativ insbesondere mittels des Werts ihrer Induktivität angeben lässt.

Des Weiteren kann das zweite Element bzw. die Spule ein rotationssymmetrisches Bauteil sein. Alternativ dazu kann das zweite Element bzw. die Spule auch eine nichtsymmetrische Gestaltung aufweisen.

Die Magnete können beispielsweise Dauermagnete bzw. Permanentmagnete sein, welche aus metallischen Legierungen bestehen können, die bspw. Eisen, Nickel und Aluminium mit Zusätzen aus Cobalt, Mangan und Kupfer enthalten können. Die Dauermagnete können jedoch auch aus einem keramischen Werkstoff, beispielsweise aus Barium- bzw. Strontiumhexaferrit, bestehen. Alternativ können die Magnete auch Elektromagnete sein, mit beispielweise einer oder zwei stromdurchflossenen Spulen mit einem Kern aus einem weichmagnetischen Werkstoff, insbesondere aus Weicheisen.

Bei der vorliegenden Stellvorrichtung für einen Fahrroboter können angrenzende Magneten jeweils eine entgegengesetzte magnetische Orientierung aufweisen.

Weiterhin kann in der Stellvorrichtung eine Vielzahl von Magneten im Inneren des Aktuatorbereichs angeordnet sein. Des Weiteren können die Magnete jeweils eine zylindrische bzw. eine scheibenförmige Gestaltung aufweisen. Aufgrund der rotationssymmetrischen Gestaltung der Magnete im Aktuatorbereich können diese mittels einer Bohrung in die Betätigungsstange eingebracht werden. Bei der vorliegenden Stellvorrichtung können die Magnete im Aktuatorbereich auch bündig mit der äußeren Umfangsfläche des Aktuatorbereichs abschließen, so dass der Aktuatorbereich vollständig von den Magneten gebildet wird. Alternativ dazu können die Magnete des Aktuatorbereichs ringförmig ausgebildet sein, wobei diese dann mit ihrer inneren Umfangsfläche vom äußeren Umfangsbereich des Aktuatorbereichs aufgenommen werden.

Bei einer vorliegenden Stellvorrichtung für einen Fahrroboter kann der elektrische Strom durch die zumindest eine Spule im Wesentlichen proportional zu der eingeleiteten Kraft der Betätigungsstange in das Pedal sein. Unter proportional kann ein im Wesentlichen linearer Zusammenhang zwischen dem elektrischen Strom für eine Spule und der daraus resultierenden Kraft der Betätigungsstange in das Pedal verstanden werden. Alternativ dazu kann auch ein nicht-linearer Zusammenhang darunter verstanden werden, wobei die Nichtlinearität bei der Steuerung des elektrischen Stroms für die Spule beispielsweise durch die Verwendung einer Kennlinie berücksichtigt werden kann, so dass die gewünschte Betätigungskraft am Pedal zur Verfügung gestellt werden kann.

Weiterhin kann in der vorliegenden Stellvorrichtung die Betätigungsstange im stromlosen Zustand der Spule bzw. des zweiten Elements mit geringen Kräften drehbar sein. Dies ist insbesondere im Hinblick auf das Verbinden des Kontakt-, bzw. Verbindungselements der Betätigungsstange mit dem Pedal beim Einrichten der Stellvorrichtung vorteilhaft, da nach dem Ausschalten des elektromagnetischen Krafterzeugungsmittels das Kontakt-, bzw. Verbindungselement der Betätigungsstange mit geringer Kraft verschwenkt werden und anschließend manuell in den Bereich unterhalb des Pedals verschoben werden kann, wobei für das Verbinden des Kontakt-, bzw. Verbindungselements mit dem Pedal dann nur noch ein weiteres Verschwenken in Richtung des Pedals erforderlich ist. Die exakte Einstellung der Position des Kontakt-, bzw. Verbindungselements mit dem Pedal erfolgt abschließend durch das Verschieben der Betätigungsstange.

Bei einer vorliegenden Stellvorrichtung für einen Fahrroboter kann im stromlosen Zustand der Spule die Betätigungsstange mittels der Rückstellkraft des Pedals in ihre Ausgangslage verfahrbar sein. Dies bietet den Vorteil, dass damit nach dem Ende des zu prüfenden Fahrzyklus durch das Ausschalten des elektromagnetischen Krafterzeugungsmittels die Betätigungsstange automatisch in die Nullstellung des Pedals geführt wird, so dass bei einem erneuten Durchlaufen des Fahrzyklus ein Rückstellen der Betätigungsstange in die Ausgangslage entfallen kann.

Des Weiteren können bei der vorliegenden Stellvorrichtung Magnetfeldsensoren vorgesehen sind, welche die Magnete im Aktuatorbereich mit einer Phasenverschiebung von im Wesentlichen 90° abtasten, so dass dadurch mittels einer Interpolation die Position der Betätigungsstange bestimmbar ist. Dadurch können die Magnetsensoren zur Positionserkennung der Betätigungsstange eingesetzt werden, wobei durch die Interpolation der Sinus- und Kosinuswerte der Messwerte der Magnetfeldsensoren ein hoch auflösendes Wegsignal zur Verfügung steht.

Weiterhin kann bei der vorliegenden Stellvorrichtung für einen Fahrroboter die Länge des Aktuatorgehäuse im Wesentlichen der Länge des elektromagnetischen Krafterzeugungsmittels entsprechen.

Vorteilhafte Ausgestaltungen und weitere Details der vorliegenden Erfindung werden im Folgenden anhand verschiedener Ausführungsbeispiele mit Bezug auf schematische Figuren beschrieben.
Fig. 1 zeigt eine Draufsicht eines Stellmittels für eine vorliegende Stellvorrichtung,
Fig. 2 zeigt eine Seitenansicht des Stellmittels gemäß Fig. 1,
Fig. 3 zeigt eine seitliche Schnittansicht entlang der Schnittlinie A-A des Stellmittels gemäß Fig. 2,
Fig. 4 zeigt eine Detailansicht des Bereichs Z des Stellmittels gemäß Fig. 3,
Fig. 5 zeigt eine Vordersicht des Stellmittels gemäß Fig. 1,
Fig. 6 zeigt eine seitliche Ansicht einer Stellvorrichtung mit dem Stellmittel gemäß Fig. 1,
Fig. 7 zeigt eine perspektivische Ansicht der Stellvorrichtung gemäß Fig. 6,
Fig. 8 zeigt eine Draufsicht der Stellvorrichtung gemäß Fig. 6,
Fig. 9 zeigt eine Vorderansicht der Stellvorrichtung gemäß Fig. 6,
Fig. 10 zeigt eine perspektivische Ansicht der Stellvorrichtung gemäß Fig. 6 in einem Fahrzeug,
Fig. 11 zeigt eine Draufsicht des Fahrzeug mit einer Stellvorrichtung gemäß Fig. 10,
Fig. 12 zeigt eine Ansicht von der Seite des Fahrzeugs gemäß Fig. 10,
Fig. 13 zeigt eine Teilschnittansicht des Fahrzeugs gemäß Fig. 10, und
Fig. 14 zeigt eine perspektivische Ansicht des Fahrzeugs mit eingeschobenen Betätigungsstangen für die Stellvorrichtung gemäß Fig. 10.

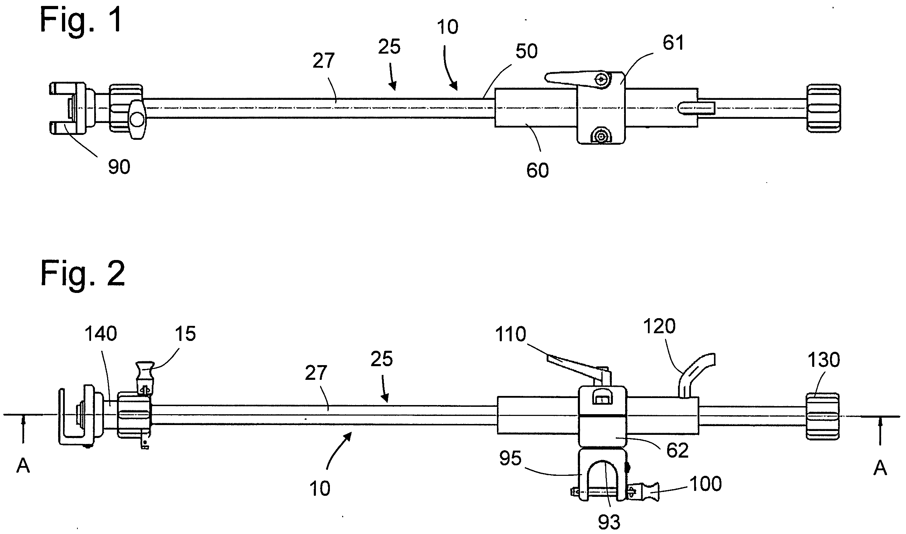

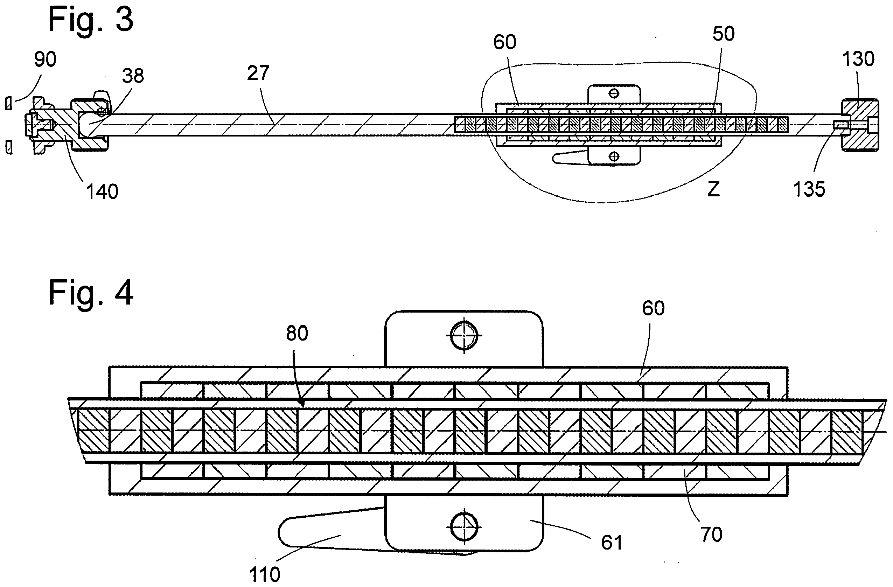

Bezugnehmend auf die Fig. 1-5 wird nun ein Stellmittel 10 für eine vorliegende Stellvorrichtung für einen Fahrroboter beschrieben. Die wesentlichen Komponenten des Stellmittels 10 bilden dabei eine Betätigungsstange 25, welche in einem Aktuatorgehäuse 60 aufgenommen wird und darin verschiebbar gelagert ist, sowie ein elektromagnetisches Krafterzeugungsmittel, das aus einer Spule 70 (als ein erstes Element) und aus zumindest einem Magneten 80 (als zweites Element) gebildet wird. Vorzugsweise kommt eine Vielzahl von Magneten 80 zum Einsatz. Die Betätigungsstange 25 weist einen Aktuatorbereich 50 und einen Verbindungsabschnitt 27 mit einem Kontakt-, bzw. Verbindungselement 90 auf, wobei das Verbindungselement 90 an einem Längsende des Verbindungsabschnitts 27 angeordnet ist. Die Vielzahl von Magneten 80 sind im Inneren des Aktuatorbereichs 50 der Betätigungsstange 25 angeordnet.

Im Bereich des freien Längsendes des Aktuatorbereichs 50 ist ein Anschlag 130 ausgebildet, welcher ein Herausrutschen der Betätigungsstange 25 aus dem Aktuatorgehäuse 60 verhindert. Der Anschlag 130 ist mittels einer Schraube 135 mit der Betätigungsstange 25 verbunden.

Das Verbindungselement 90 weist eine U-förmige Gestaltung auf, wobei der Innenbereich des Verbindungselements 90 mit einem Pedal (nicht dargestellt) eines Fahrzeugs (nicht dargestellt) verbunden wird, so dass das Stellmittel 10 im Betrieb der Stellvorrichtung das Pedal mit Hilfe der Betätigungsstange 25 mit einer Kraft beaufschlagen und somit bedienen kann. Das Verbindungselement 90 ist mit einer Kopplungshülse 140 verbunden.

Die Kopplungshülse 140 weist an dem Längsende, welches der Verbindung der Kopplungshülse 140 mit dem Verbindungselement 90 gegenüber liegt, eine Gestaltung in der Art eines Innensechskants auf, wobei in dessen Inneren ein Verbindungskopf 38, der am freien Längsende des Verbindungsabschnitts 27 ausgebildet ist und derart gestaltet ist, dass eine Drehmomentübertragung zwischen dem Verbindungsabschnitt 27 und der Kopplungshülse 140 möglich ist, aufgenommen wird. Dadurch kann das Verbindungselement 90 den Regelbewegungen der Betätigungsstange 25 folgen. Eine gewünschte Stellung des Verbindungselements 90 zwischen der Kopplungshülse 140 und der Betätigungsstange 25 kann mittels eines Pedalklemmhebels 15 fixiert werden.

Zur elektrischen bzw. steuerungstechnischen Versorgung der Spule 70 und von Magnetfeldsensoren (nicht dargestellt) im Aktuatorgehäuse 60 zur Positionsbestimmung der Betätigungsstange 25 ist das Aktuatorgehäuse 60 mit einer Kabelleitung 120 verbunden, welche in ihrem Inneren Stromversorgungskabel (nicht dargestellt) führt, die mit einer Spannungsquelle (nicht dargestellt) verbunden sind. Die Kabelleitung 120 führt zudem in ihrem Inneren zumindest ein Datenkabel (nicht dargestellt), das mit einem Steuerungsrechner (nicht dargestellt) verbunden ist.

Das Aktuatorgehäuse 60 weist eine im Wesentlichen hohlzylindrische Gestaltung auf, wobei an den Längsenden des Aktuatorgehäuses 60 Dichtungen (nicht dargestellt) vorgesehen sein können, welche das Innere des Aktuatorgehäuses 60 vor einem Eintrag von Schmutz aus dem Aktuatorbereich 50 der verschiebbaren Betätigungsstange 25 schützen können. Das Aktuatorgehäuse 60 weist im Mittenbereich seiner Längsenden jeweils eine Bohrung auf, wodurch der Aktuatorbereich 50 in das Aktuatorgehäuse 60 hinein- bzw. durchgeführt wird. Der Durchmesser der Bohrung ist größer als der Durchmesser des Aktuatorbereichs 50, weshalb zwischen den beiden Bauteilen ein Spalt vorhanden ist.

Das Aktuatorgehäuse 60 wird von einer oberen Klemmbacke 61 und einer unteren Klemmbacke 62 aufgenommen, wobei diese jeweils einen Lagerbereich (nicht dargestellt) aufweisen, welcher in der Art einer Lagerschale ausgebildet ist und jeweils zur Verbindung mit dem Aktuatorgehäuse 60 dient. Dadurch wird das Aktuatorgehäuse 60 drehbar und in Längsrichtung des Aktuatorgehäuses 60 verschiebbar gelagert. Zur Fixierung des Aktuatorgehäuses 60 mit den Klemmbacken 61, 62 ist ein Klemmhebel 110 vorgesehen, der die beiden Klemmbacken 61, 62 mit dem Aktuatorgehäuse 60 verspannen kann bzw. zum Bewegen des Aktuatorgehäuses 60 die Verbindung auch wieder lösen kann. Die untere Klemmbacke 62 ist mit einem Rohrverbinder 95 verbunden, der zur Verbindung des Stellmittels 10 mit einem Aufnahmerohr (nicht dargestellt) dient, wobei der Rohrverbinder 95 einen Rohraufnahmebereich 93 aufweist, der sich in Querrichtung zum Aktuatorgehäuse 60 erstreckt. Zur Fixierung des Stellmittels 10 mit dem Aufnahmerohr weist der Rohrverbinder 95 im Endbereich seiner Aufnahmeschenkel eine Bohrung auf, welche einen Fixierstift 100 aufnimmt, der durch ein Verdrehen für ein Verspannen des Aufnahmerohrs mit dem Rohraufnahmebereich 93 des Rohrverbinders 95 sorgt.

Im Inneren des Aktuatorgehäuses 60 ist im Bereich der inneren Umfangswandung eine Spule 70 angeordnet, die aus einer Vielzahl von Windungen besteht. Die Spule 70 umschließt den äußeren Umfangsbereich des Aktuatorbereichs 50 der Betätigungsstange 25, wobei zwischen den beiden Bauteilen ein Spalt ausgebildet wird. Der Spalt zwischen dem äußeren Umfangsbereich des Aktuatorbereichs 50 und der Spule 70 ist rotationssymmetrisch. Die Spule 70 weist ebenfalls eine rotationssymmetrische Gestaltung auf.

Im Betrieb wird die Spule 70 von einem elektrischen Strom durchflossen, der ein Magnetfeld um die Spule 70 erzeugt. Das Magnetfeld der Spule 70 überlagert sich dann mit dem Magnetfeld des/der Magnete(n) 80 des Aktuatorbereichs 50 der Betätigungsstange 25, wodurch eine resultierende Kraft auf die Betätigungsstange 25 ausgeübt wird, deren Größe im Wesentlichen proportional zum Strom durch die Spule 70 ist. Zudem sorgt diese resultierende Kraft für eine Relativbewegung der Betätigungsstange 25 gegenüber dem fixierten Aktuatorgehäuse 60, wobei die Richtung der Relativbewegung von der Stromdurchflussrichtung in der Spule 70 abhängt.

Die Vielzahl von Magneten 80 im Inneren des Aktuatorbereichs 50 weisen jeweils eine zylindrische Gestaltung auf, wobei deren Durchmesser geringer als der Durchmesser des Aktuatorbereichs 50 ist. Zudem weisen angrenzende Magneten jeweils eine entgegengesetzte magnetische Orientierung auf. Die Länge des Aktuatorbereichs 50 wird durch die gesamte Länge der jeweils angrenzenden Magneten 80 bestimmt.

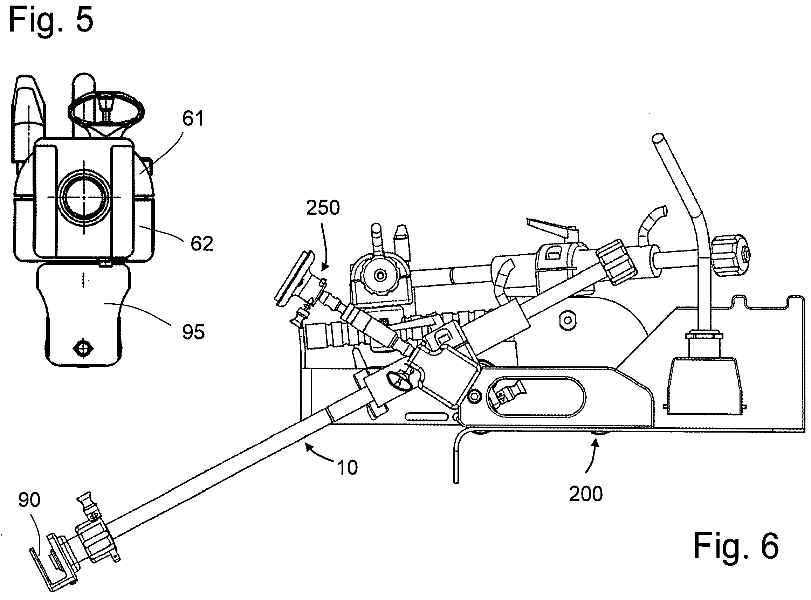

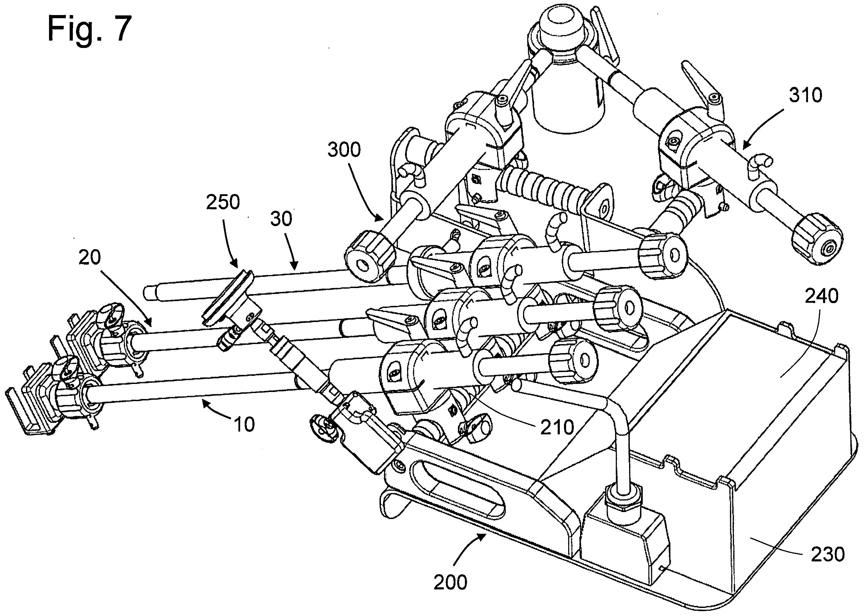

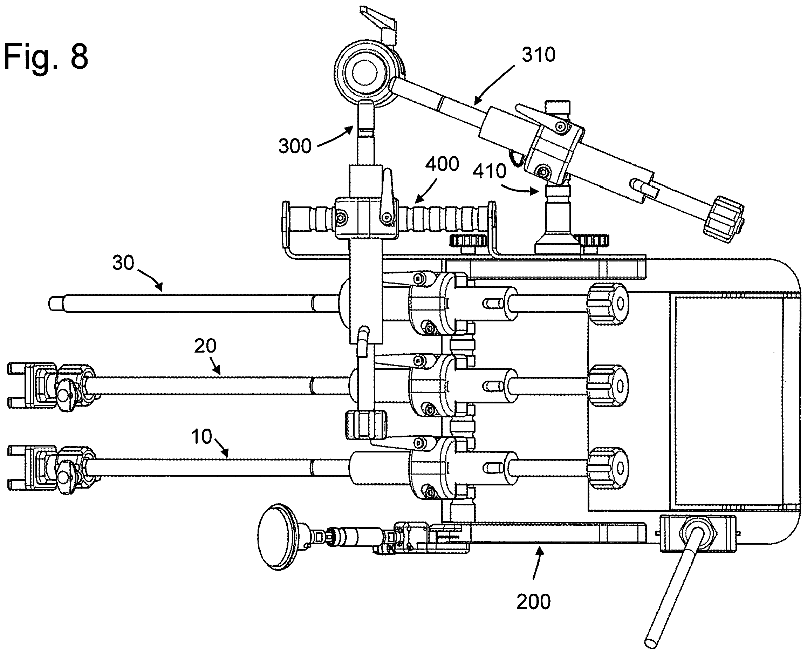

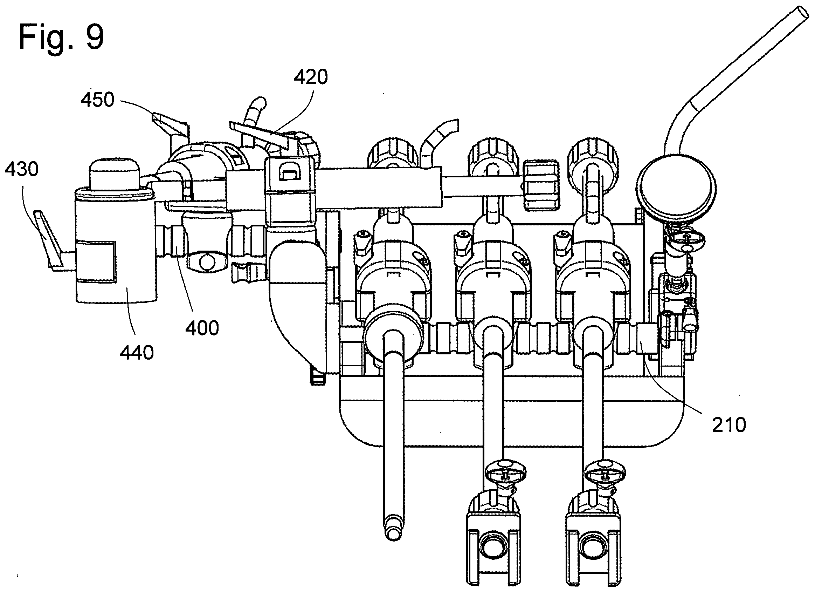

Bezugnehmend auf die Fig. 6-9 wird nun eine vorliegende Stellvorrichtung für einen Fahrroboter beschrieben, wobei mehrere Stellmittel 10, 20, 30, 300, 310 zur Betätigung von unterschiedlichen Pedalen bzw. Bauteilen vorgesehen sind. Die Stellmittel 10 und 20 weisen jeweils ein Verbindungselement 90 auf, welches zum Verbinden der jeweiligen Betätigungsstange 25 des Stellmittels mit einem Pedal (nicht dargestellt) dient. Das Stellmittel 30 weist hingegen kein entsprechendes Verbindungselement auf. So dient das Stellmittel 10 zur Betätigung der Kupplung in einem Fahrzeug (nicht dargestellt), während das daneben angeordnete Stellmittel 20 zur Betätigung des Pedals für die Bremse dient. Das Stellmittel 30 dient zur Betätigung des Geschwindigkeitspedals. Die Stellmittel 10, 20, 30 sind mit einem gekerbten Aufnahmerohr 210 verbunden, wodurch diese angrenzend beabstandet angeordnet sind. Der Abstand zwischen zwei Stellmitteln richtet sich dabei nach dem Abstand zwischen zwei zugehörigen benachbarten Pedalen.

Weiterhin weist die Stellvorrichtung noch zwei Stellmittel 300, 310 für die Betätigung eines Getriebeschalthebels 440 auf, wobei die Einbaulage der Stellmittel 300, 310 zur Anpassung an die jeweilige Position des Schalthebels (nicht dargestellt) mittels jeweils eines gekerbten Getriebeaufnahmerohrs 400 bzw. 410 einstellbar ist. Die Stellmittel 300, 310 weisen jeweils einen Klemmhebel 420, 450 auf, welche eine verdrehfeste Fixierung der Stellmittel 300, 310 gewährleisten.

Das gekerbte Aufnahmerohr 210 ist mit einer Sitzkonstruktion 200 verbunden, welche in einem zu prüfenden Fahrzeug anstatt eines handelsüblichen Sitzes verwendet wird. Die Sitzkonstruktion 200 weist in demjenigen Bereich, der üblicherweise vom Fahrer des Fahrzeugs eingenommen wird, ein Steuerungsrechnergehäuse 230 auf, welches den Steuerungsrechner 240 (nicht dargestellt) in seinem Inneren aufnimmt. Der Steuerungsrechner 240 stellt sämtliche Informationen bzw. Befehle für die Betätigung der verwendeten Stellmittel während eines Fahrzyklus bzw. einer Funktionsprüfung an dem Fahrzeug zur Verfügung.

Mit der Sitzkonstruktion 200 ist ein Abstützelement 250 verbunden, dessen freies Ende mit dem Armaturenbrett (nicht dargestellt) des Fahrzeugs in Verbindung steht.

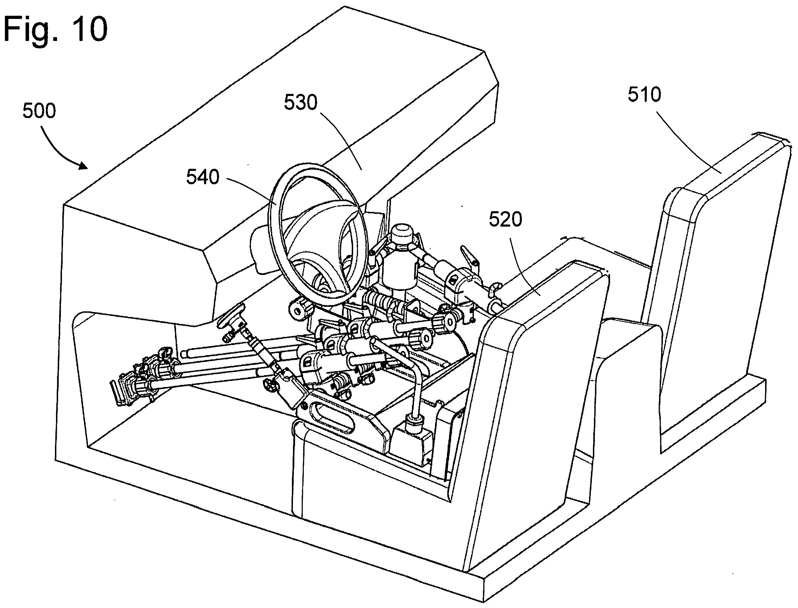

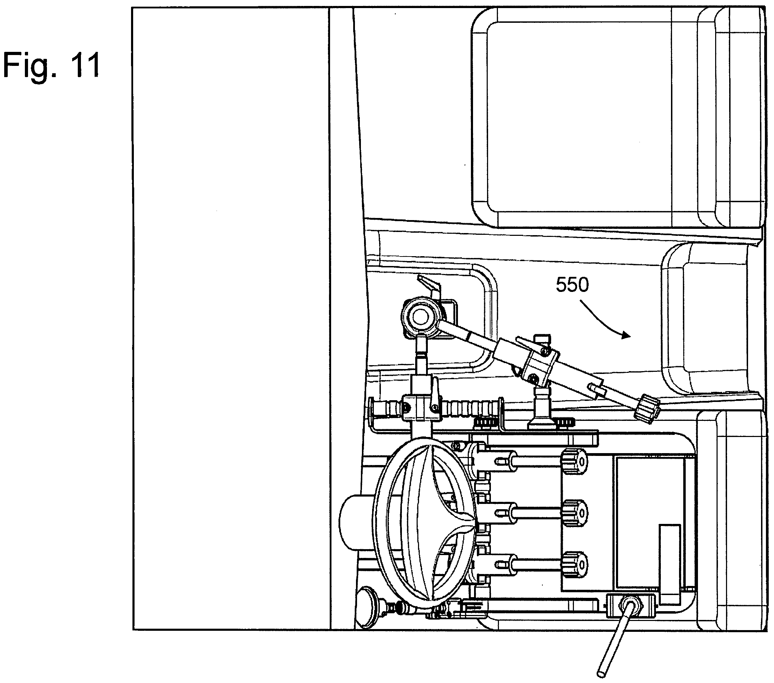

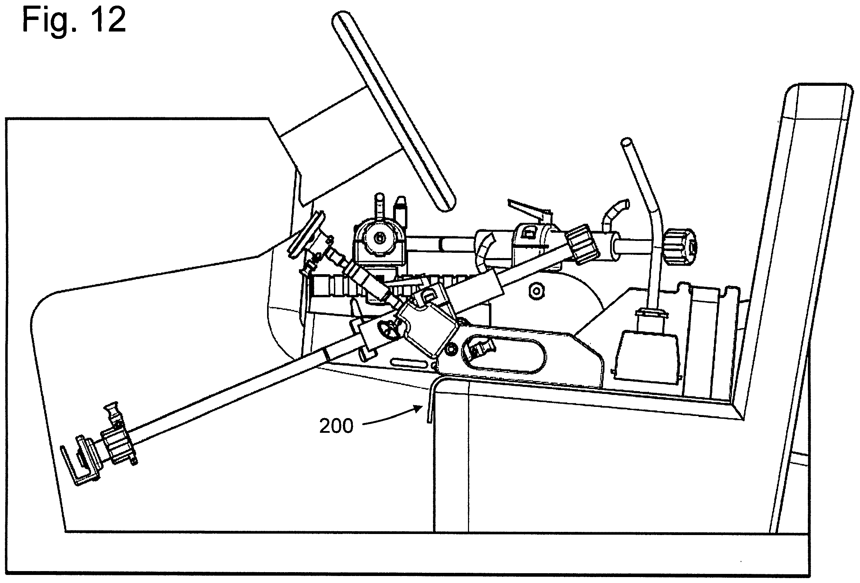

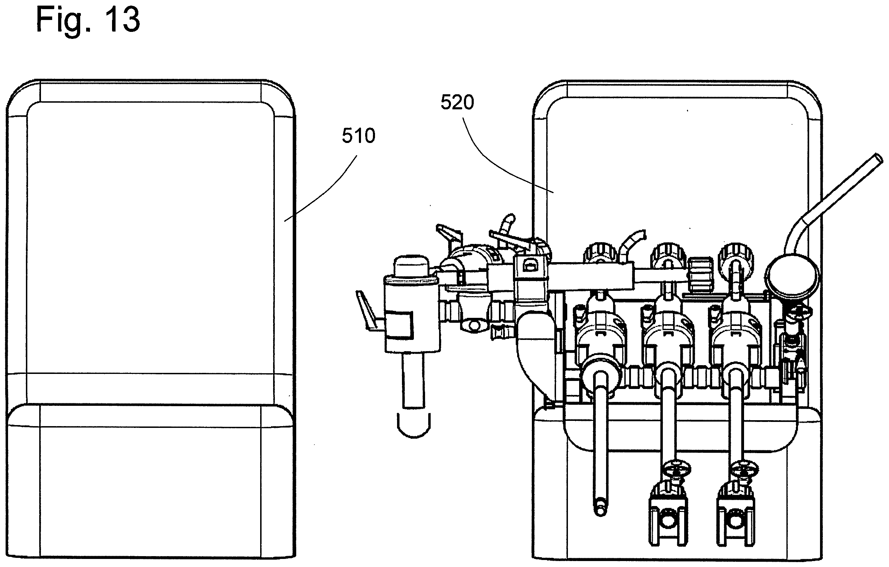

Bezugnehmend auf die Fig. 10-14 wird nun eine vorliegende Stellvorrichtung für ein Fahrzeug 500 beschrieben, wobei die Komponenten aus dem Innenraum des Fahrzeugs 500 lediglich schematisch dargestellt sind. An einem Armaturenbrett 530 des Fahrzeugs 500 ist ein Lenkrad 540 angebracht. Die Sitzkonstruktion 200 ist an einem Sitz 520 auf der Fahrerseite des Fahrzeugs 500 befestigt. Benachbart zu dem Fahrersitz 520 ist der Beifahrersitz 510 angeordnet, wobei die beiden Sitze durch eine Mittelkonsole 550 voneinander getrennt sind.

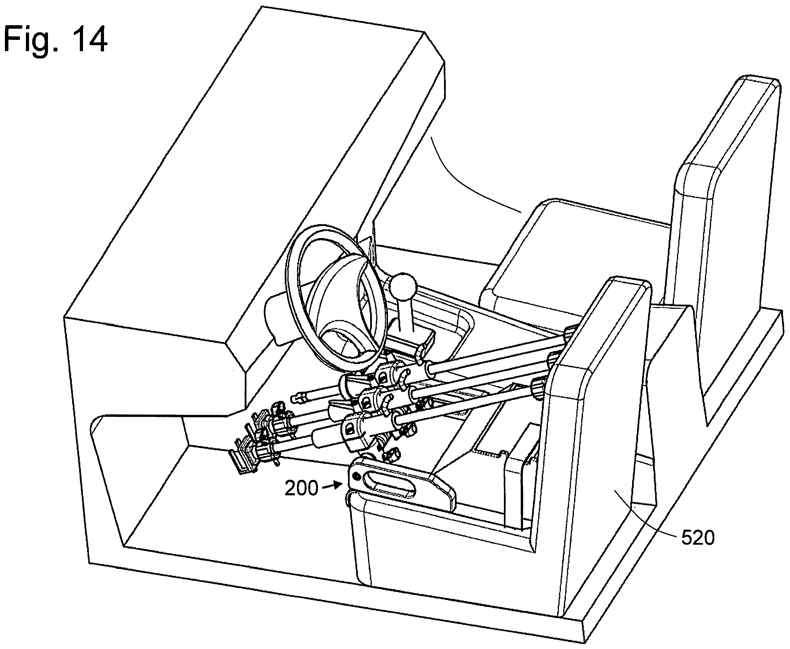

Die Fig. 14 zeigt in einer perspektivischen Ansicht einen Ausschnitt aus dem Innenraum des Fahrzeugs 500, wobei sich die vorliegende Stellvorrichtung in einer Einsetz- bzw. Entnahmekonfiguration befindet. Vor dem Einsetzen der Stellvorrichtung in das Fahrzeug 500 werden die Betätigungsstangen der einzelnen Stellmittel jeweils nach hinten oben (in Richtung Sitz) verschoben, so dass sich diese nach dem Einsetzen der Sitzkonstruktion 200 auf den Fahrersitz 520 nicht im Bereich der Pedale (nicht dargestellt) befinden, wodurch das Einsetzen der Sitzkonstruktion 200 wesentlich vereinfacht wird.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen.

## Patentansprüche

1. Stellvorrichtung für einen Fahrroboter, mit zumindest einem Stellmittel (10, 20, 30, 300, 310), umfassend:
- zumindest eine Betätigungsstange (25), die einen Aktuatorbereich (50) und ein Kontaktelement aufweist, wobei das Kontaktelement mit einem Pedal in Verbindung bringbar ist und die Betätigungsstange (25) im Aktuatorbereich (50) ein rotationssymmetrisches Bauteil ist, das im Aktuatorbereich (50) in einem Aktuatorgehäuse (60) verschiebbar aufgenommen ist; und
wobei die Betätigungsstange (25) im Aktuatorbereich (50) ein erstes Element (80) enthält und das Aktuatorgehäuse (60) ein zweites Element (70) aufweist, das in einem äußeren Umfangsbereich des ersten Elements (80) vorgesehen ist, wobei das erste Element (80) und das zweite Element (70) ein elektromagnetisches Krafterzeugungsmittel zum Verfahren der Betätigungsstange (25) bilden,
**gekennzeichnet dadurch, dass** Magnetfeldsensoren vorgesehen sind, welche Magnete im Aktuatorbereich (50) abtasten, so dass dadurch mittels einer Interpolation die Position der Betätigungsstange (25) und damit die Position des mit dem Kontaktelement in Verbindung bringbaren Pedals bestimmbar ist.

2. Stellvorrichtungfür einen Fahrroboter nach Anspruch 1, **dadurch gekennzeichnet, dass** der Aktuatorbereich (50) im Betrieb in jeder beliebigen Stellung der Betätigungsstange (25) an beiden Enden des Aktuatorgehäuse (60) übersteht.

3. Stellvorrichtungfür einen Fahrroboter nach Anspruch 1 oder 2, **dadurch gekennzeichnet, dass** sich der Aktuatorbereich (50) in jeder beliebigen Stellung der Betätigungsstange (25) in Längsrichtung durch das Aktuatorgehäuse (60) erstreckt.

4. Stellvorrichtung für einen Fahrroboter nach Anspruch 3, **dadurch gekennzeichnet, dass** in dem Krafterzeugungsmittel das erste Element (70) zumindest eine Spule ist und das zweite Element (80) zumindest einen Magneten aufweist.

5. Stellvorrichtung für einen Fahrroboter nach Anspruch 4, **dadurch gekennzeichnet, dass** angrenzende Magneten jeweils eine entgegengesetzte magnetische Orientierung aufweisen.

6. Stellvorrichtung für einen Fahrroboter nach Anspruch 5 oder 6, **dadurch gekennzeichnet, dass** eine Vielzahl von Magneten im Inneren des Aktuatorbereichs (50) angeordnet sind und die Magnete jeweils eine zylindrische bzw. eine scheibenförmige Gestaltung aufweisen.

7. Stellvorrichtung für einen Fahrroboter nach zumindest einem der Ansprüche 4-6, **dadurch gekennzeichnet, dass** der Strom durch die zumindest eine Spule im Wesentlichen proportional zu der eingeleiteten Kraft der Betätigungsstange (25) in das Pedal ist.

8. Stellvorrichtung für einen Fahrroboter nach zumindest einem der Ansprüche 4-7, **dadurch gekennzeichnet, dass** die Betätigungsstange (25) im stromlosen Zustand der Spule mit geringen Kräften drehbar ist.

9. Stellvorrichtung für einen Fahrroboter nach zumindest einem der Ansprüche 4-8, **dadurch gekennzeichnet, dass** im stromlosen Zustand der Spule die Betätigungsstange (25) mittels der Rückstellkraft des Pedals in ihre Ausgangslage verfahrbar ist.

## Claims

1. An actuating device for a driving robot, having at least one actuating means (10, 20, 30, 300, 310), comprising:
- at least one actuating rod (25) comprising an actuator region (50) and a contact element, wherein said contact element can be brought into connection with a pedal and in said actuator region (50) said actuating rod (25) is a rotationally symmetrical component, which is slidably received in an actuator housing (60) in said actuator region (50); and
wherein said actuating rod (25) includes a first element (80) in said actuator region (50), and said actuator housing (60) includes a second element (70) which is provided in an outer circumferential region of said first element (80), said first element (80) and said second element (70) forming an electromagnetic force generating means for moving said actuating rod (25),
**characterized in that**
magnetic field sensors are provided that scan said magnets in said actuator region (50) so that, thereby, the position of said actuating rod (25) and therefore the position of said pedal connectable with said contact element can be determined by means of an interpolation.

2. The actuating device for a driving robot according to claim 1, **characterized in that**, in operation, said actuator region (50) protrudes at both ends of said actuator housing (60) in any position of said actuating rod (25).

3. The actuating device for a driving robot according to claim 1 or 2, **characterized in that** said actuator region (50) extends in the longitudinal direction through said actuator housing (60) in any position of said actuating rod (25).

4. The actuating device for a driving robot according to claim 3, **characterized in that** said first element (70) in said force generating means is at least one coil and said second element (80) includes at least one magnet.

5. The actuating device for a driving robot according to claim 4, **characterized in that** adjacent magnets each have an opposite magnetic orientation.

6. The actuating device for a driving robot according to claim 5 or 6, **characterized in that** a plurality of magnets is disposed inside said actuator region (50) and said magnets each have a cylindrical or disc-shaped design.

7. The actuating device for a driving robot according to at least one of the claims 4 to 6, **characterized in that** the current through said at least one coil is substantially proportional to the force of said actuating rod (25) introduced into said pedal.

8. The actuating device for a driving robot according to at least one of the claims 4 to 7, **characterized in that**, in a de-energized state of said coil, said actuating rod (25) is rotatable with little force.

9. The actuating device for a driving robot according to at least one of the claims 4 to 8, **characterized in that**, in a de-energized state of said coil, said actuating rod (25) is movable into its initial position by means of the restoring force of said pedal.

## Revendications

1. Dispositif de positionnement pour un robot conducteur, comportant au moins un moyen de positionnement (10, 20, 30, 300, 310), comprenant :
- au moins une tige d'actionnement (25) qui comprend une zone d'actionneur (50) et un élément de contact, l'élément de contact étant susceptible d'être mis en connexion avec une pédale et la tige d'actionnement (25) étant un composant à symétrie de révolution dans la zone d'actionneur (50), qui est reçu de façon mobile en translation dans un boîtier d'actionneur (60), dans la zone d'actionneur (50) ; et
la tige d'actionnement (25) comprenant un premier élément (80) dans la zone d'actionneur (50), et le boîtier d'actionneur (60) comprenant un second élément (70) qui est prévu dans une zone périphérique extérieure du premier élément (80), le premier élément (80) et le second élément (70) formant un moyen de génération de force électromagnétique pour déplacer la tige d'actionnement (25),
**caractérisé en ce que**
il est prévu des capteurs de champ magnétique qui palpent des aimants dans la zone d'actionneur (50), permettant de déterminer par interpolation la position de la tige d'actionnement (25) et ainsi la position de la pédale susceptible d'être mise en connexion avec l'élément de contact.

2. Dispositif de positionnement pour un robot conducteur selon la revendication 1, **caractérisé en ce que** pendant le fonctionnement, dans n'importe quelle position de la tige d'actionnement (25), la zone d'actionneur (50) dépasse aux deux extrémités du boîtier d'actionneur (60).

3. Dispositif de positionnement pour un robot conducteur selon la revendication 1 ou 2, **caractérisé en ce que** dans n'importe quelle position de la tige d'actionnement (25), la zone d'actionneur (50) s'étend en direction longitudinale à travers le boîtier d'actionneur (60).

4. Dispositif de positionnement pour un robot conducteur selon la revendication 3, **caractérisé en ce que** dans le moyen de génération de force, le premier élément (70) est au moins une bobine et le second élément (80) comprend au moins un aimant.

5. Dispositif de positionnement pour un robot conducteur selon la revendication 4, **caractérisé en ce que** des aimants adjacents présentent respectivement des orientations magnétiques opposées.

6. Dispositif de positionnement pour un robot conducteur selon la revendication 5 ou 6, **caractérisé en ce qu'**une multitude d'aimants sont agencés à l'intérieur de la zone d'actionneur (50) et les aimants présentent chacun une configuration cylindrique ou en forme de disque.

7. Dispositif de positionnement pour un robot conducteur selon l'une au moins des revendications 4 à 6, **caractérisé en ce que** le courant à travers ladite au moins une bobine est sensiblement proportionnel à la force appliquée de la tige d'actionnement (25) dans la pédale.

8. Dispositif de positionnement pour un robot conducteur selon l'une au moins des revendications 4 à 7, **caractérisé en ce que** dans l'état sans courant de la bobine, la tige d'actionnement (25) est rotative à des forces faibles.

9. Dispositif de positionnement pour un robot conducteur selon l'une au moins des revendications 4 à 8, **caractérisé en ce que** dans l'état sans courant de la bobine, la tige d'actionnement (25) est déplaçable dans sa position de départ au moyen de la force de rappel de la pédale.
